# EUROPÄISCHE PATENTSCHRIFT

(11) **EP 2 053 484 B1**
(45) Veröffentlichungstag und Bekanntmachung des Hinweises auf die Patenterteilung: **23.01.2013**
(21) Anmeldenummer: 08105641.8
(22) Anmeldetag: 23.10.2008
(51) Int. Cl.: G05G 1/50, B29C 45/16, B29C 45/33

(54) **Stellknopf**
Control knob
Bouton de commande

(30) Priorität: 25.10.2007 DE 102007051399
(43) Veröffentlichungstag der Anmeldung: 29.04.2009
(73) Patentinhaber: Continental Automotive GmbH, 30165 Hannover (DE)
(72) Erfinder: Bolte, Peter, 35418, Buseck (DE); Fiegler, Till, 35510, Butzbach / Maibach (DE); Strobel, Henry, 65843, Sulzbach (DE)

(56) Entgegenhaltungen:
- WO-A1-01/74562
- DE-A1- 19 856 902
- DE-B3-102006 011 641
- DE-U1-202004 020 339
- DE-U1-202006 015 438
- US-B1- 6 192 774

## Beschreibung

Die Erfindung bezieht sich auf einen Stellknopf für einen Drehsteller mit mindestens einer ersten Komponente und einer zweiten Komponente, die als Spritzgussteile hergestellt und miteinander verbunden sind und die in einer Ebene nebeneinander liegende und aneinander angrenzende Oberflächen aufweisen.

Bei derartigen Bedienelementen ist es bekannt, die erste und die zweite Komponente separat herzustellen und danach die beiden Komponenten z. B. mittels Rastverbindung miteinander zu verbinden.

Diese Ausbildung erfordert einen Herstellungsaufwand für die Komponenten und einen großen Montageaufwand für den Zusammenbau der Komponenten.

US 6192774 beschreibt ein herkömmlicher Stellknopf.

Aufgabe der Erfindung ist es daher, einen Stellknopf der eingangs genannten Art zu schaffen, das mit geringem Aufwand herstellbar und montierbar ist.

Diese Aufgabe wird erfindungsgemäß dadurch gelöst, dass die erste Komponente oberflächenbeschichtet und die zweite Komponente nicht oberflächenbeschichtet ist und die erste Komponente und die zweite Komponente als Mehrkomponentenspritzgussteil hergestellt sind, wobei die Oberflächenbeschichtung der ersten Komponente sich bis an den an die zweite Komponente angrenzenden Rand der ersten Komponente erstreckt und zwischen den nebeneinander liegenden Oberflächen der ersten Komponente und der zweiten Komponente ein Schlitz mit einer Breite < 1 mm gebildet ist und der Stellknopf einen die erste Komponente bildenden zylindrischen Zierring und ein die zweite Komponente bildendes ringförmigen Betätigungsteil aufweist, das annähernd den gleichen Außendurchmesser aufweist wie der Zierring, wobei das ringförmige Betätigungsteil in einer in der radial umlaufenden Mantelfläche des Zierrings ausgebildeten Ringnut angeordnet ist und wobei der Zierring an seinem von dem Betätigungsteil unbedeckten, an die Ringnut angrenzenden Bereich die Oberflächenbeschichtung aufweist.

Dabei kann der Stellknopf um die Längsachse von Zierring und Betätigungsteil drehbar gelagert sowie der Zierring mehrteilig ausgebildet sein.

Durch die Herstellung als Mehrkomponentenspritzgussteil entfällt eine Montagetätigkeit und es ist auch nur ein Spritzgießwerkzeug erforderlich.

Damit entfällt auch ein Logistikaufwand zum Lagern und einander Zuführen der einzelnen Komponenten.

Durch den Schlitz zwischen der ersten und der zweiten Komponente wird ein unsauberer Trennungsbereich zwischen der Oberflächenbeschichtung der ersten Komponente und der nicht oberflächenbeschichteten zweiten Komponente vermieden, da der Rand der Oberflächenbeschichtung in den Schlitz hingezogen ist und nicht zur zweiten Komponente herüberwachsen kann.

Die Breite des Schlitzes ist groß genug, um ein solches Herüberwachsen zu verhindern, aber klein genug, um optisch oder haptisch nicht wahrgenommen zu werden.

Dazu ist es völlig ausreichend, wenn der Schlitz eine Breite zwischen 0,1 mm und 0,5 mm, insbesondere von 0,3 mm aufweist.

Eine einfache, keinen wesentlichen Aufwand erfordernde Möglichkeit zur Erzeugung des Schlitzes besteht darin, dass der Schlitz durch einen bei der Herstellung des Mehrkomponentenspritzgussteils in der Spritzgussform angeordneten Schiebers erzeugt ist.

In einer weiteren, die gleichen Vorteile aufweisenden Ausbildung kann der Schlitz durch Schwinden der ersten Komponente und/oder der zweiten Komponente nach dem Spritzvorgang erzeugt sein.

Besteht die erste Komponente aus einem starren Kunststoff und die zweite Komponente aus einem elastischen Kunststoff, so sorgt die erste Komponente für die Formstabilität des Bedienelements, während die zweite Komponente gut und sicher erfassbar ist und für eine sichere Bedienbarkeit sorgt.

Die erste Komponente kann aus ABS (Acrylnitrid-, Butadien-, Styrol-Copolymer) oder ABS/PC (Acrylnitrid-, Butadien-, Styrol/Polycarbonat) oder PC (Polycarbonat) oder PA (Polyamid) und die zweite Komponente aus TPE oder aus TPU (thermoplastische Elastomere) oder EPDM (Ethylen-Propylen-Dien-Kautschuk) oder SEBS (Styrol/Ethenbuten/Styrol-Block-Copolymerisat) bestehen.

Die Oberflächenbeschichtung kann eine galvanisierte Metallbeschichtung sein und insbesondere aus Chrom bestehen.

Es ist aber auch möglich, dass die Oberflächenbeschichtung eine Farbbeschichtung z. B. aus einem Lack ist.

Ausführungsbeispiele der Erfindung sind in der Zeichnung dargestellt und werden im Folgenden näher beschrieben. Es zeigen
- Figur 1: ein erstes Ausführungsbeispiel eines Stellknopfes im Querschnitt,
- Figur 2: ein zweites Ausführungsbeispiel eines Stellknopfes im Querschnitt,
- Figur 3a: einen Ausschnitt im Bereich der Ringnut eines dritten Ausführungsbeispiels eines Stellkopfes im Querschnitt mit einem Schieber,
- Figur 3b: den Ausschnitt nach Figur 3a ohne Schieber,
- Figur 4a: einen Ausschnitt im Bereich der Ringnut eines vierten Ausführungsbeispiels eines Stellknopfes im Querschnitt mit einem Schieber,
- Figur 4b: den Ausschnitt nach Figur 4a ohne Schieber,
- Figur 5a: einen Ausschnitt im Bereich der Ringnut des Ausführungsbeispiels der Figur 1 im Querschnitt mit Schieber,
- Figur 5b: den Ausschnitt nach Figur 5a ohne Schieber,
- Figur 6a: einen Ausschnitt im Bereich der Ringnut eines fünften Ausführungsbeispiels eines Stellknopfs im Querschnitt mit einem Schieber,
- Figur 6b: den Ausschnitt nach Figur 6a ohne Schieber,
- Figur 7a: einen Ausschnitt im Bereich der Ringnut eines sechsten Ausführungsbeispiels eines Stellknopfs im Querschnitt mit einem Schieber und
- Figur 7b: den Ausschnitt nach Figur 7a ohne Schieber.

Die dargestellten Stellknöpfe eines Drehstellers für Kraftfahrzeuge weisen einen Zierring 1, 1' auf, der an seiner radial umlaufenden Mantelfläche eine Ringnut 2, 2' aufweist.

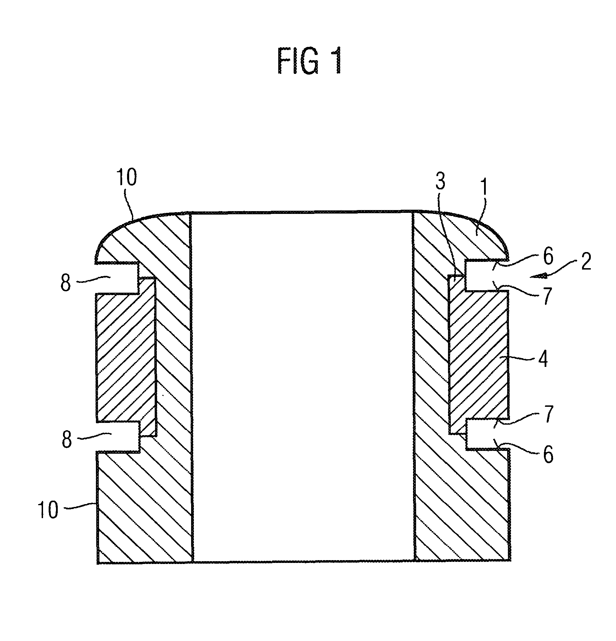

In den Figuren 1 und 3a - 5a ist am Boden der Ringnut 2 eine weitere Ringnut 3 geringerer Breite ausgebildet, so dass eine Stufe gebildet ist.

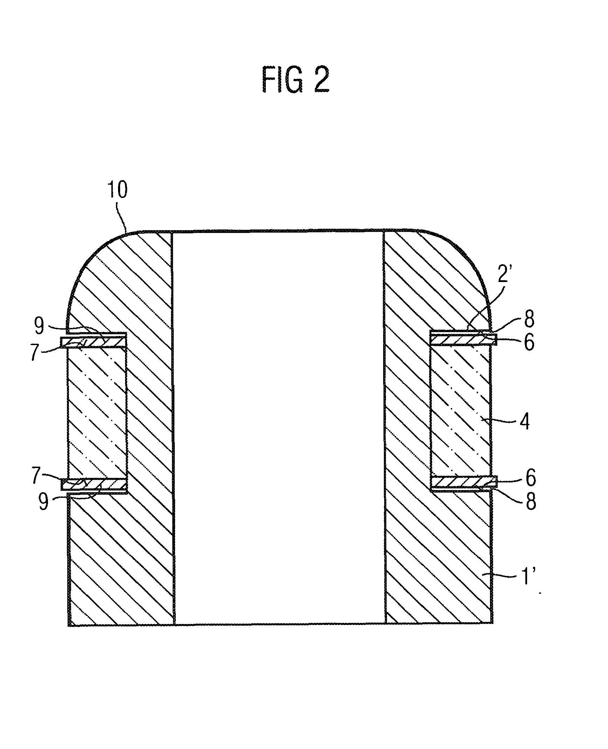

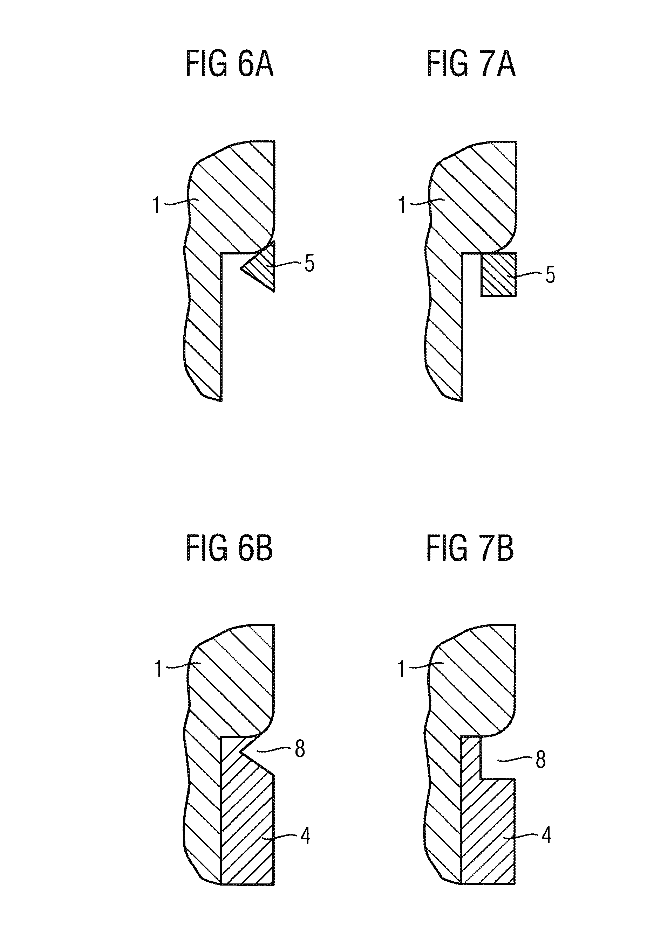

Bei den Figuren 2, 6a und 7a ist die Ringnut 2' ohne eine solche Stufe ausgebildet.

Der Zierring 1, 1' ist in einem Mehrkomponentenspritzgussverfahren aus einem starr aushärtenden Kunststoff erzeugt, wobei bei dem Mehrkomponentenspritzgussverfahren in der Ringnut 2, 2' ein Kunststoff eingespritzt ist, der ein ringförmiges Bestätigungsteil 4 bildet, das nach Aushärten des Kunststoffs elastisch ist.

Die Außendurchmesser des Zierrings 1, 1' und des Betätigungsteils 4 sind gleich. Sie könnten aber auch unterschiedliche Außendurchmesser besitzen.

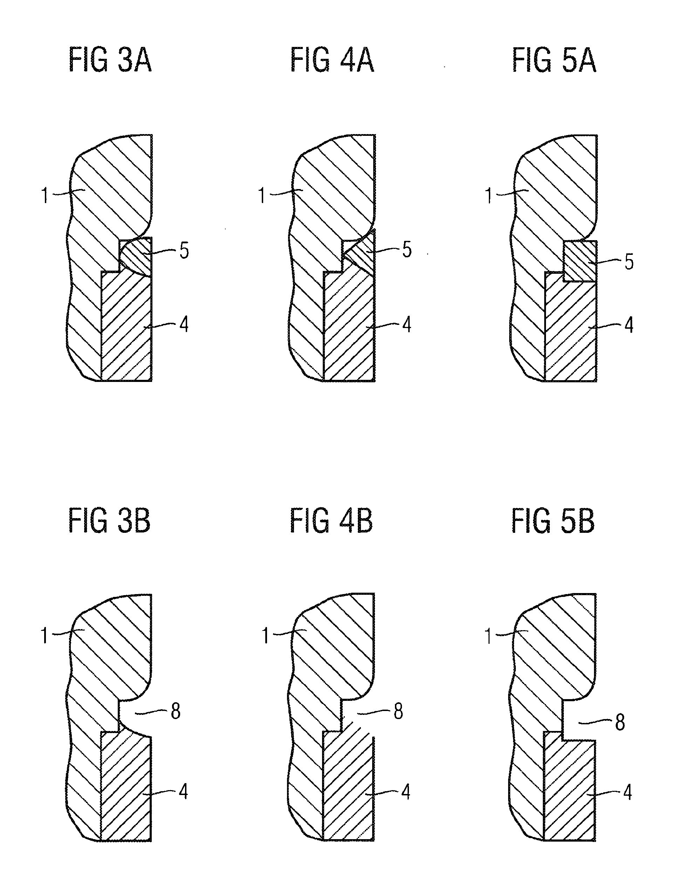

Wie in den Figuren 3a bis 7a zu sehen ist, sind während des Mehrkomponentenspritzgussverfahrens Schieber 5 in den Bereich der radial umlaufenden Seitenwände 6 der Ringnuten 2 eingeführt, so dass in axialer Richtung zwischen den radial umlaufenden Seitenwänden 6 der Ringnut 2 und den radial umlaufenden Seitenwänden 7 der Betätigungsteile 4 ein radial umlaufender Schlitz 8 erzeugt wird.

Wie den Figuren 3b - 7b zu entnehmen ist, können die Schlitze 8 je nach Querschnitt der Schieber 5 unterschiedliche Querschnitte aufweisen.

Die Breite der Schlitze 8 ist aber immer geringer als 1 mm.

Bei dem Ausführungsbeispiel der Figur 2 wird zwischen den radial umlaufenden Seitenwänden 6 der Ringnut 2 und den radial umlaufenden Seitenwänden 7 des Betätigungsteils 4 ebenfalls ein radial umlaufender Schlitz 8 gebildet, der durch stärkeres Schwinden des Kunststoffs des Betätigungsteils 4 gegenüber dem Kunststoff des Zierrings 1' gebildet ist.

Das Maß des Schwindens ist durch eine Schraffur 9 dargestellt.

Die Kunststoffe von Zierring 1' und Betätigungsteil 4 sind derart, dass sie beim Spritzvorgang keine Verbindung miteinander eingehen.

Nach dem Herstellen von Zierring 1, 1' und Betätigungsteil 4 als Mehrkomponentenspritzgussteil erhält der Zierring 1, 1' durch Galvanisieren eine Oberflächenbeschichtung 10 aus Chrom.

Das Betätigungsteil 4 bleibt unbeschichtet.

Durch die Schlitze 8 wird eine saubere Begrenzung und Trennung der Oberflächenbeschichtung 10 an dem an die Ringnut 2, 2' angrenzenden Bereich des Zierrings 1, 1' erreicht und ein unsauberes Herüberwachsen der Oberflächenbeschichtung 10 zum Randbereich des Betätigungsteils 4 vermieden.

## Patentansprüche

1. Stellknopf für einen Drehsteller mit mindestens einer ersten Komponente und einer zweiten Komponente, die als Spritzgussteile hergestellt und miteinander verbunden sind und die in einer Ebene nebeneinander liegende und aneinander angrenzende Oberflächen aufweisen, **dadurch gekennzeichnet, dass** die erste Komponente oberflächenbeschichtet und die zweite Komponente nicht oberflächenbeschichtet ist und die erste Komponente und die zweite Komponente als Mehrkomponentenspritzgussteil hergestellt sind, wobei die Oberflächenbeschichtung (10) der ersten Komponente sich bis an den an die zweite Komponente angrenzenden Rand der ersten Komponente erstreckt und zwischen den nebeneinander liegenden Oberflächen der ersten Komponente und der zweiten Komponente ein Schlitz (8) mit einer Breite < 1 mm gebildet ist und der Stellknopf einen die erste Komponente bildenden zylindrischen Zierring (1, 1') und ein die zweite Komponente bildendes ringförmigen Betätigungsteil (4) aufweist, das annähernd den gleichen Außendurchmesser aufweist wie der Zierring (1, 1'), wobei das ringförmige Betätigungsteil (4) in einer in der radial umlaufenden Mantelfläche des Zierrings (1, 1') ausgebildeten Ringnut (2, 2') angeordnet ist und wobei der Zierring (1, 1') an seinem von dem Betätigungsteil (4) unbedeckten, an die Ringnut (2, 2') angrenzenden Bereich die Oberflächenbeschichtung (10) aufweist.

2. Stellknopf für einen Drehsteller nach Anspruch 1, **dadurch gekennzeichnet, dass** der Schlitz (8) eine Breite zwischen 0,1 mm und 0,5 mm, insbesondere von 0,3 mm aufweist.

3. Stellknopf für einen Drehsteller nach einem der vorhergehenden Ansprüche, **dadurch gekennzeichnet, dass** der Schlitz (8) durch einen bei der Herstellung des Mehrkomponentenspritzgussteils in der Spritzgussform angeordneten Schiebers (5) erzeugt ist.

4. Stellknopf für einen Drehsteller nach einem der Ansprüche 1 bis 3, **dadurch gekennzeichnet, dass** der Schlitz (8) durch Schwinden der ersten Komponente und/oder der zweiten Komponente nach dem Spritzvorgang erzeugt ist.

5. Stellknopf für einen Drehsteller nach einem der vorhergehenden Ansprüche, **dadurch gekennzeichnet, dass** die erste Komponente aus einem starren Kunststoff und die zweite Komponente aus einem elastischen Kunststoff besteht.

6. Stellknopf für einen Drehsteller nach Anspruch 5, **dadurch gekennzeichnet, dass** die erste Komponente aus ABS (Acrylnitrid-, Butadien-, StyrolCopolymer) oder ABS/PC (Acrylnitrid-, Butadien-, Styrol/Polycarbonat) oder PC (Polycarbonat) oder PA (Polyamid) besteht.

7. Stellknopf für einen Drehsteller nach Anspruch 5, **dadurch gekennzeichnet, dass** die zweite Komponente aus TPE oder TPU (thermoplastische Elastomere) oder EPDM (Ethylen-Propylen-Dien-Kautschuk) oder SEBS (Styrol/Ethenbuten/Styrol-Block-Copolymerisat) besteht.

8. Stellknopf für einen Drehsteller nach einem der vorhergehenden Ansprüche, **dadurch gekennzeichnet, dass** die Oberflächenbeschichtung (10) eine galvanisierte Metallbeschichtung ist.

9. Stellknopf für einen Drehsteller nach Anspruch 8, **dadurch gekennzeichnet, dass** die Metallbeschichtung aus Chrom besteht.

10. Stellknopf für einen Drehsteller nach einem der Ansprüche 1 bis 7, **dadurch gekennzeichnet, dass** die Oberflächenbeschichtung eine Farbbeschichtung ist.

11. Stellknopf für einen Drehsteller nach einem der vorhergehenden Ansprüche, **dadurch gekennzeichnet, dass** der Stellknopf um die Längsachse von Zierring (1, 1') und Betätigungsteil (4) drehbar gelagert ist.

12. Stellknopf für einen Drehsteller nach einem der vorhergehenden Ansprüche, **dadurch gekennzeichnet, dass** der Zierring mehrteilig ausgebildet ist.

## Claims

1. Control knob for a rotary actuator comprising at least a first component and a second component, which are produced as injection-moulded parts and are connected to each other and which have surfaces that lie next to each other in a plane and are adjacent to each other, **characterized in that** the first component is surface-coated and the second component is not surface-coated and the first component and the second component are produced as a multi-component injection-moulded part, wherein the surface coating (10) of the first component extends up to the border of the first component that is adjacent to the second component and a slit (8) with a width < 1 mm is formed between the surfaces lying next to each other of the first component and the second component and the control knob has a cylindrical decorative ring (1, 1'), which forms the first component, and an annular actuating part (4), which forms the second component and has approximately the same outside diameter as the decorative ring (1, 1'), wherein the annular actuating part (4) is arranged in an annular groove (2, 2') formed in the radially peripheral outer surface of the decorative ring (1, 1') and wherein the decorative ring (1, 1') has the surface coating (10) at its region that is not covered by the actuating part (4) and is adjacent to the annular groove (2, 2').

2. Control knob for a rotary actuator according to Claim 1, **characterized in that** the slit (8) has a width of between 0.1 mm and 0.5 mm, in particular of 0.3 mm.

3. Control knob for a rotary actuator according to one of the preceding claims, **characterized in that** the slit (8) is produced by a slide (5) arranged in the injection mould during the production of the multi-component injection-moulded part.

4. Control knob for a rotary actuator according to one of Claims 1 to 3, **characterized in that** the slit (8) is produced by shrinkage of the first component and/or the second component after the injecting operation.

5. Control knob for a rotary actuator according to one of the preceding claims, **characterized in that** the first component consists of a rigid plastic and the second component consists of a flexible plastic.

6. Control knob for a rotary actuator according to Claim 5, **characterized in that** the first component consists of ABS (acrylonitrile, butadiene, styrene copolymer) or ABS/PC (acrylonitrile, butadiene, styrene/polycarbonate) or PC (polycarbonate) or PA (polyamide).

7. Control knob for a rotary actuator according to Claim 5, **characterized in that** the second component consists of TPE or TPU (thermoplastic elastomers) or EPDM (ethylenepropylene-diene rubber) or SEBS (styrene/ethene-butene/styrene block copolymer).

8. Control knob for a rotary actuator according to one of the preceding claims, **characterized in that** the surface coating (10) is a galvanized metal coating.

9. Control knob for a rotary actuator according to Claim 8, **characterized in that** the metal coating consists of chromium.

10. Control knob for a rotary actuator according to one of Claims 1 to 7, **characterized in that** the surface coating is a paint coating.

11. Control knob for a rotary actuator according to one of the preceding claims, **characterized in that** the control knob is mounted rotatably about the longitudinal axis of the decorative ring (1, 1') and the actuating part (4).

12. Control knob for a rotary actuator according to one of the preceding claims, **characterized in that** the decorative ring is of a multi-part form.

## Revendications

1. Bouton de commande d'un actionneur rotatif, comprenant au moins un premier composant et un deuxième composant, qui sont fabriqués sous la forme de pièces moulées par injection et reliés entre eux et qui ont des surfaces se trouvant l'une à côté de l'autre dans un plan et voisines l'une de l'autre, **caractérisé en ce que** le premier composant est revêtu en surface et le deuxième composant n'est pas revêtu en surface et le premier composant et le deuxième composant sont fabriqués sous la forme d'une pièce moulée par injection à plusieurs composants, le revêtement (10) de surface du premier composant s'étendant jusqu'au bord du premier composant voisin du deuxième composant et entre les surfaces voisines l'une de l'autre du premier composant et du deuxième composant est formée une fente (8) d'une largeur inférieure à 1 mm et le bouton de commande a un anneau (1, 1') enjoliveur cylindrique, formant le premier composant, et une partie (4) d'actionnement annulaire, formant le deuxième composant et ayant à peu près le même diamètre extérieur que l'anneau (1, 1') enjoliveur, la partie (4) d'actionnement annulaire étant disposée dans une rainure (2, 2') annulaire constituée dans la surface latérale faisant le tour radialement de l'anneau (1, 1') enjoliveur et l'anneau (1, 1') enjoliveur ayant le revêtement (10) de surface sur sa région non recouverte de la partie (4) d'actionnement et voisine de la rainure (2, 2') annulaire.

2. Bouton de commande d'un actionneur rotatif suivant la revendication 1, **caractérisé en ce que** la fente (8) a une largeur comprise entre 0,1 mm et 0,5 mm, notamment de 0,3mm.

3. Bouton de commande d'un actionneur rotatif suivant l'une des revendications précédentes, **caractérisé en ce que** la fente (8) est produite par un tiroir (5) monté dans le moule de moulage par injection, lors de la fabrication de la partie moulée par injection en plusieurs composants.

4. Bouton de commande d'un actionneur rotatif suivant l'une des revendications 1 à 3, **caractérisé en ce que** la fente (8) est produite, après l'opération d'injection, par rétrécissement du premier composant et/ou du deuxième composant.

5. Bouton de commande d'un actionneur rotatif suivant l'une des revendications précédentes, **caractérisé en ce que** le premier composant est en une matière plastique rigide et le deuxième composant en une matière plastique élastique.

6. Bouton de commande d'un actionneur rotatif suivant la revendication 5, **caractérisé en ce que** le premier composant est en ABS (copolymère d'acrylonitrile, de butadiène et de styrène) ou en ABS/PC (copolymère d'acrylonitrile, de butadiène et de styrène/polycarbonate) ou en PC (polycarbonate) ou en PA (polyamide).

7. Bouton de commande d'un actionneur rotatif suivant la revendication 5, **caractérisé en ce que** le deuxième composant est en TPE ou TPU (élastomère thermoplastique) ou en EPDM (caoutchouc d'éthylène, propylène de diène) ou en SEBS (copolymérisat séquencé de styrène, d'éthène-butène et de styrène).

8. Bouton de commande d'un actionneur rotatif suivant l'une des revendications précédentes, **caractérisé en ce que** le revêtement (10) de surface est un revêtement métallique galvanisé.

9. Bouton de commande d'un actionneur rotatif suivant la revendication 8, **caractérisé en ce que** le revêtement métallique est en chrome.

10. Bouton de commande d'un actionneur rotatif suivant l'une des revendications 1 à 7, **caractérisé en ce que** le revêtement de surface est un revêtement coloré.

11. Bouton de commande d'un actionneur rotatif suivant l'une des revendications précédentes, **caractérisé en ce que** le bouton de commande est monté tournant autour de l'axe longitudinal de l'anneau (1, 1') enjoliveur et de la partie (4) d'actionnement.

12. Bouton de commande d'un actionneur rotatif suivant l'une des revendications précédentes, **caractérisé en ce que** l'anneau enjoliveur est en plusieurs parties.
